# EUROPEAN PATENT APPLICATION

(11) **EP 2 309 625 A2**
(43) Date of publication of application: **13.04.2011**
(21) Application number: 10186700.0
(22) Date of filing: 06.10.2010
(51) Int. Cl.: H02K 15/06

(54) **Method and apparatus for installing/removing stator bars of an alternator, in particular an alternator of a turbo-generator for the production of electrical energy**

(30) Priority: 06.10.2009 IT MI20091709
(71) Applicant: Ansaldo Energia S.p.A., Genova (IT)
(72) Inventor: SQUERI, Bruno Enrico, 16133, GENOVA (IT)
(74) Representative: Jorio, Paolo

(57) **Abstract**

Apparatus (10) for installing/removing stator bars of an alternator has: at least two actuator units (11), which are substantially aligned along an axis (A) and are provided with anchorage members (25) for fixing each unit (11) to an inner lateral wall (3) of a stator (1); at least two movable slides (12), which co-operate with respective units (11) and are actuated thereby; and at least one bar support (13), which is carried fixed by the slides (12) and extends parallel to the axis (A) between respective ends of the slides (12); the slides (12) are substantially arc-shaped and are actuated by the units (11) so as to rotate about the axis (A).

## Description

The present invention relates to a method and apparatus for installing/removing stator bars of an alternator or other rotary electrical machine.

In particular, the present invention regards installation/removal of the stator bars of an alternator of a turbo-generator for the production of electrical energy, where the alternator is mechanically supplied by a turbine, to which the present description will make specific reference without, however, this implying any loss in generality.
As is known, an alternator of a turbo-generator comprises a stator and a rotor. Generally, the stator comprises a cylindrical core, which extends along a longitudinal axis and has a plurality of axial slots and two opposite heads, a plurality of stator bars, which define electrical windings and are at least partially housed in the slots, and terminals from which the electrical energy is drawn off.

The bars normally have rectilinear stretches set in the slots and axial end stretches of various shapes, generally curved, which are set at the heads and have the function of connecting together the rectilinear stretches set in different slots and connecting some rectilinear stretches to the terminals.

Installation/removal of the stator bars, during first assembly of the alternator and in the subsequent maintenance operations, is inconvenient on account of the dimensions and weight of the bars and the poor accessibility within the stator.

Normally, the operations of installation/removal of the bars are carried out to a large extent manually, only in part with the assistance of lifting devices to facilitate transport of the bars and/or with the assistance of tools for pushing the bars into the slots. As all the operations where manual intervention by operators is preponderant, this mode of operation is not fully satisfactory, also because it exposes the bars to high risks of damage.

Methods that resort more extensively to assistance by machines for movement of the bars present, instead, the drawback of using relatively complicated and costly machinery, which is suited to the use only with large-sized alternators.

An aim of the present invention is to provide a method and apparatus for installing/removing stator bars of an alternator that will overcome the problems highlighted above. In particular, an aim of the invention is to provide a method and apparatus that will be relatively simple and inexpensive, will enable relatively simple and fast operations of installation/removal, with reduced need to resort to manual intervention on the part of operators, and will be suitable also for small-sized and medium-sized alternators, where the operations of access within the stator are more problematical.

The present invention hence regards a method and apparatus for installing/removing the stator bars of an alternator as defined in basic terms in the annexed Claim 1 and Claim 9, respectively, as well as, for the preferred additional characteristics, in the dependent claims.

The apparatus of the invention is simple and inexpensive to build, as well as easy to use. In addition, during the installation manoeuvres, the bar is always adequately supported by the apparatus and hence protected from damage.

Also the installation and removal of the apparatus according to the invention is simple and fast. The apparatus moreover presents small dimensions and contained weights so that its transport is also convenient.

The operations of installation and removal carried out according to the invention are consequently simple and fast and can be conducted with a small number of operators, who are moreover not required to make any particular physical effort.

Further characteristics and advantages of the present invention will emerge clearly from the ensuing description of a non-limiting example of embodiment thereof, with reference to the figures of the annexed plates of drawings, wherein:
- Figure 1 is a perspective schematic view of the inside of a stator of an alternator, in particular of a turbo-generator for the production of electrical energy, installed in which is the apparatus according to the invention;
- Figure 2 is a partially sectioned schematic view and with parts removed for clarity of a detail of the apparatus of Figure 1;
- Figure 3 is a perspective schematic view of a part of the apparatus of Figure 1, extracted from the stator.

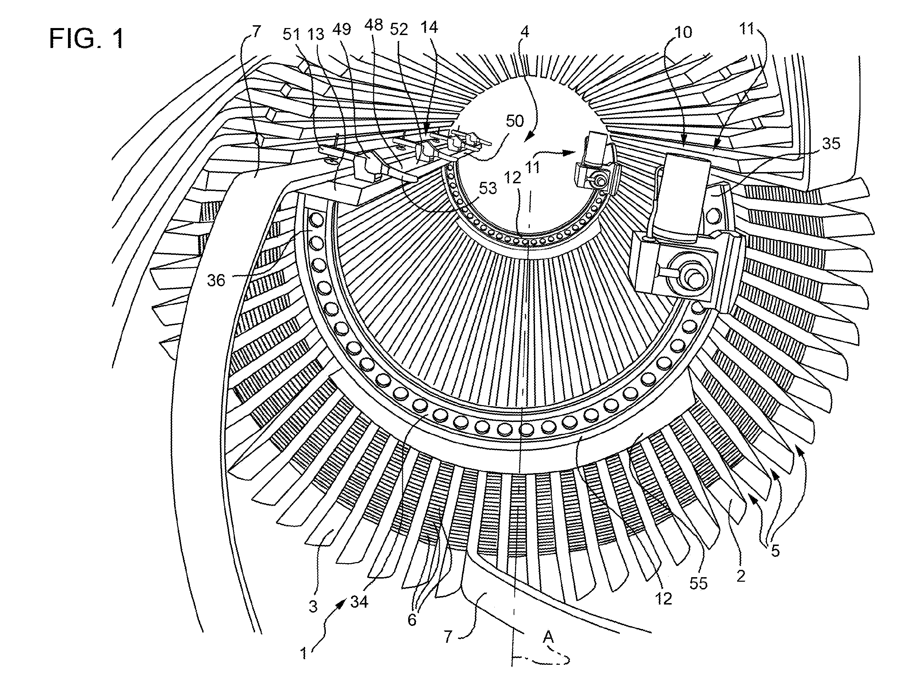

Figure 1 is a schematic illustration of the inside of a stator 1 of an alternator, for example of a turbo-generator for the production of electrical energy extending along a longitudinal axis A.

As is known, the alternator comprises also a rotor, which is housed inside the stator and is able to rotate about the axis A, and a pair of heads set at respective longitudinal ends of the stator. Figure 1 shows the stator from which the rotor has been extracted and from which the heads have been removed.

The stator 1 comprises a hollow cylindrical core 2, which extends along the axis A and has an inner lateral wall 3, which delimits an inner chamber 4; the wall 3 is provided with a plurality of axial slots 5, which are constituted by respective grooves set parallel to the axis A and set circumferentially at a distance from one another about the axis A and extend substantially throughout the length of the core 2.

The slots 5 are separated and delimited by longitudinal projections 6 parallel to the axis A that define the core 2.

The stator 1 further comprises a plurality of stator bars 7, which define electrical windings and are at least partially housed in the slots 5, and terminals for drawing off the electrical energy (not illustrated).

Figure 1 shows some bars 7 housed in respective slots 5, whilst other slots 5 are without the respective bars 7.

Figure 1 moreover shows apparatus 10 for installation/removal of the bars 7, provisionally installed in the chamber 4 for installing or removing the bars 7.

The apparatus 10 comprises two or more motor-driven actuator units 11 associated to respective movable slides 12, actuated by the units 11, and at least one bar support 13, carried fixed by the slides 12 and provided with a clamping system 14 for constraining a bar 7 to the bar support 13.

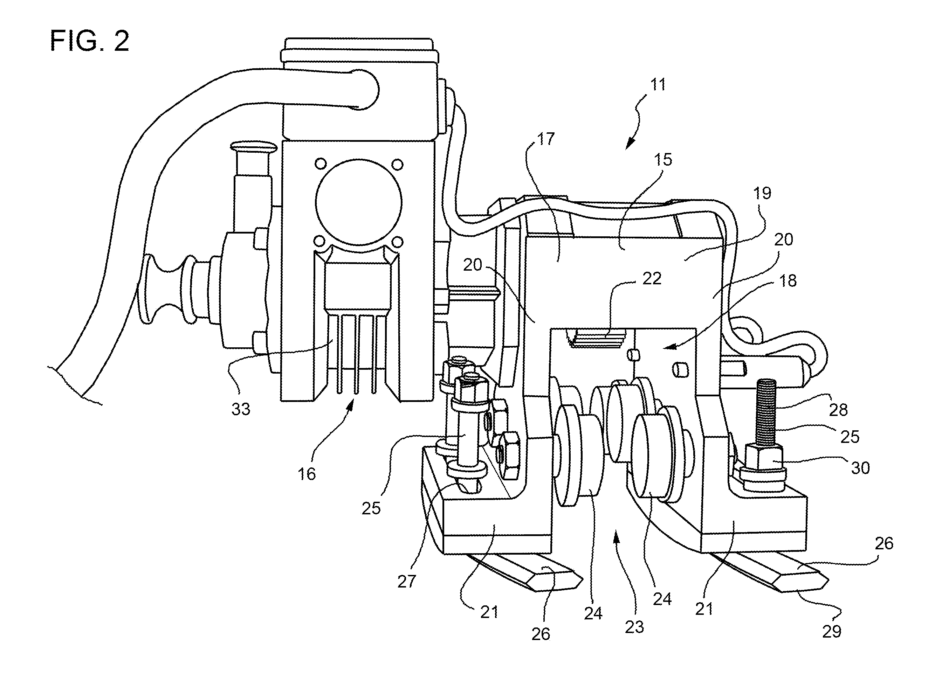

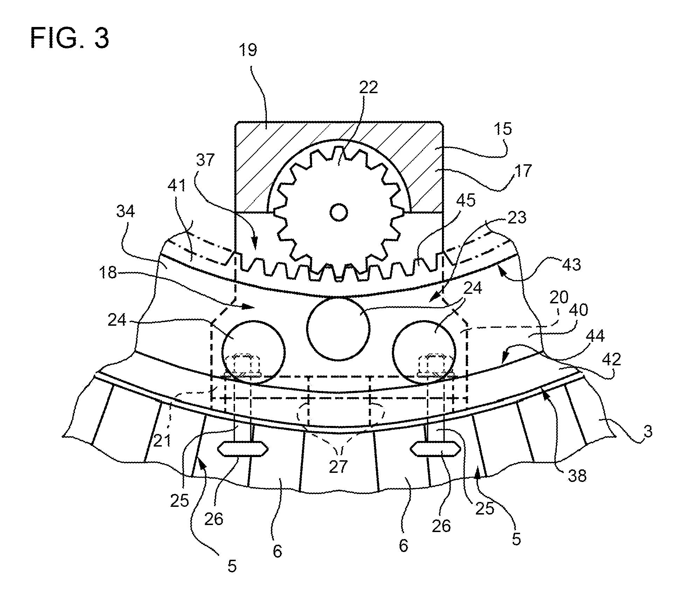

With reference also to Figures 2 and 3, each unit 11 comprises a case 15 and a motor assembly 16 mounted on the case 15.

The case 15 has a main portion 17, which is substantially U-shaped and is provided with a through seat 18. I particular, the main portion 17 comprises a head 19 and a pair of sides 20, which delimit the seat 18 laterally. The sides 20 project from opposite sides of the head 19 and are provided with respective free-end flanges 21.

The head 19 houses an actuator member 22, which is mechanically connected to the motor assembly 16 and co-operates with the slide 12 so as to move the slide 12. In the case in point, the actuator member 22 is a pinion, which is supported by the head 19 and projects in the seat 18.

Housed in the seat 18 is a guide group 23. In the non-limiting example shown (but not necessarily), the guide group 23 is a guide assembly with idle wheels: the sides 20 carry respective sets of idle wheels 24, which extend from the sides 20 into the seat 18 towards one another. Each set comprises two or more wheels 24. Preferably, as in the example shown, but not necessarily, each set has at least three wheels 24 not aligned, arranged along a curved profile, in particular along a sector of a circle.

The flanges 21 are provided with anchorage members 25 for fixing the unit 11 to the inner lateral wall 3 of the stator 1.

For example, the anchorage members 25 comprise a pair of brackets 26 carried by each flange 21, and each flange 21 has a slit 27, set passing through which are the anchorage members 25. Each bracket 26 comprises a threaded stem 28, which is housed passing through a slit 27 and is able to slide along the slit 27. Provided at the opposite ends of the stem 28 are an end plate 29 substantially orthogonal to the stem 28 and a nut 30, screwed on the stem 28, which are set on opposite sides of the slit 27. The plates 29 (or more in general the anchorage members 25) are shaped and sized in such a way as to engage pairs of slots 5 for fixing the unit 11 to the wall 3.

The motor assembly 16 comprises an electric motor reducer 33, supported by a side 20 on the outside of the seat 18. The motor reducer 33 sets in rotation, via a shaft (known and not illustrated), the pinion 22.

With specific reference to Figures 1 and 3, each slide 12 comprises a curved body 34, in particular shaped like the arc of a circle. Preferably, but not necessarily, the body 34 has a substantially semicircular shape; i.e., it has an angular extension of approximately 180°, but it remains understood that it can have a different angular extension.

The body 34 extends between two angularly opposite ends 35, 36 and has a radially internal face 37 and a radially external face 38, opposite to one another.

In particular, the body 34 comprises a central portion 40, preferably lightened via through openings, and a pair of radially opposite plates 41, 42, precisely, a radially internal plate 41 and a radially external plate 42, which are provided with the radially internal face 37 and with the radially external face 38, respectively.

Preferably, the body 34 has a substantially H-shaped cross section, and both of the plates 41, 42 are connected like a T to the central portion 40 in such a way as to project laterally on opposite sides of the central portion 40 and present respective facing contrast surfaces 43, 44, each of which is formed by two surface portions set on opposite sides of the central portion 40.

The slides 12 are shaped and sized in such a way that they can be inserted in the chamber 4 and have the respective faces 38 facing respective portions of the lateral wall 3 of the chamber 4.

The body 34 has a radius of curvature substantially similar to the radius of curvature of the chamber 4; in particular, the face 38 has a radius of curvature that is substantially equal to or slightly smaller than the radius of curvature of the wall 3 of the chamber 4.

The inner face 37 of each slide 12 is provided with a curved rack 45, which follows the profile of the face 37 and is hence curved like an arc of a circle and in the case in point is substantially semicircular.

The outer face 37 has, instead, for example, a substantially smooth surface.

Each slide 12 is inserted in the seat 18 of a unit 11 and is fastened between the pinion 22 and the guide group 23. In particular, the pinion 22 meshes with the rack 45, and the wheels 24 engage the contrast surfaces 43, 44. The ends 35, 36 of the slide 12 are set on opposite sides of the seat 18 and hence of the unit 11.

The pinion 22 and the rack 45 of each unit 11 form a movement device 46, which moves the slide 12 with respect to the units 11 and rotates the slide 12 about the axis A.

The bar support 13 comprises a substantially flat and rectilinear table 48, which is set parallel to the axis A between the slides 12. The table 48 is fixed to the ends 36 of the slides 12.

The clamping system 14 comprises, for example, a plurality of clamping grippers 49, for example fast-action grippers, which are set longitudinally at a distance along a side edge 50 of the table 48 and have respective movable arms 51 that extend above a resting surface 52 of the table 48.

The apparatus 10 then optionally comprises pusher devices 53, which are carried, for example, by the bar support 13 and are set longitudinally at a distance from one another along the bar support 13 (as schematically shown in Figure 1) or separate; the pusher devices 53 comprise, for example, at least one ball-screw motor, which governs the travel of a movable member in a substantially radial direction with respect to the axis A and co-operates with the bar 7 carried by the bar support 13 for pushing the bar 7 into a slot 5.

Operation of the apparatus 10 that implements the method of the invention is described in what follows.

The units 11 are carried within the chamber 4 (for example, manually or via a purposely provided manoeuvring carriage, not illustrated) and fixed to the stator 1 via the anchorage members 25, set longitudinally (i.e., along the axis A) at a distance from one another.

Advantageously, the units 11 are fixed more or less half-way up the stator 1 (i.e., at half the vertical height of the chamber 4).

The ends 35 of the slides 12 are inserted in the seats 18, and the opposite ends 36 carry the bar support 13.

The outer faces 38 of the slides 12 face respective portions of the wall 3. Preferably, the slides 12 are mechanically supported by the units 11 and kept at a radial distance from the wall 3. The faces 38 hence do not touch the wall 3. As protection of the wall 3, also according to the internal dimensions of the stator 1 and the dimensions of the slides 12, it is advantageously possible to use curved shims 55, which are arc-shaped and have respective opposite (radially internal and radially external) curved surfaces; the shims 55 can be set between the outer face 37 of each slide 12 and the wall 3 of the chamber 4.

The slides 12 are movable with respect to the units 11 and are able to rotate about the axis A. By operating the motor assemblies 16 (appropriately governed by a common central control unit, known and not illustrated for simplicity), the pinions 22 move the respective racks 45, drawing along the slides 12, which rotate the axis A, consequently bringing the bar support 13 into a desired position along the wall 3.

In order to install a bar 7 in a pre-set slot 5, the bar 7 to be installed is set on the bar support 13, in particular resting on the resting surface 52, and blocked via the clamping system 14.

Advantageously, before setting the bar 7 on the bar support 13, the latter is brought, by moving the slides 12, into a position convenient for the operators for loading the bar 7, for example in the lowest position, i.e., in the proximity of the lowest part of the chamber 4.

The bar support 13 and the bar 7 are then brought, once again by operating the motor assemblies 16, into the desired position. Once the bar 7 has been brought into a position corresponding to the slot 5 in which the bar 7 is to be inserted, the clamping system 14 is released and, manually or (preferably) via the pusher devices 53, the bar 7 is radially pushed into the slot 5.

The bar support 13 is then brought, once again by moving the slides 12 via the units 11, into a new position, for example again into the lowest position for loading another bar 7.

In order to remove, instead, a bar 7 from the stator 1, the bar support 13 is brought into the proximity of the bar 7 to be removed, once again rotating the slides 12 via the units 11. Then the bar 7 is extracted from the slot 5 and is set on the bar support 13, blocking it with the clamping system 14. The bar support 13 is then brought into a position convenient for the operators, for example the lowest position, where the operators can conveniently remove the bar 7 from the bar support 13.

Finally, it is understood that further modifications and variations may be made to the apparatus and to the method described and illustrated herein, without thereby departing from the scope of the annexed claims.

## Claims

1. Apparatus (10) for installing/removing stator bars of an alternator, comprising: at least two actuator units (11), substantially aligned along an axis (A) and provided with anchorage members (25) for fixing each unit (11) to an inner lateral wall (3) of a stator (1); at least two movable slides (12), which co-operate with respective units (11) and are actuated by said units; and at least one bar support (13), which is carried fixed by the slides (12) and extends parallel to the axis (A) between respective ends of the slides (12); the slides (12) being substantially arc-shaped and being operated by the units (11) to rotate about the axis (A).

2. The apparatus according to Claim 1, wherein each unit (11) and the respective slide (12) co-operate via a movement device (46), which moves the slide (12) with respect to the unit (11) and rotates the slide (12) about the axis (A).

3. The apparatus according to Claim 2, wherein the movement device (46) comprises a pinion (22), which is carried by the unit (11) and engages a rack (45) carried by the slide (12).

4. The apparatus according to Claim 3, wherein each unit (11) has a through seat (18), inserted in which is a slide (12) and which houses a guide group (23), for example, a guide group with idle wheels, co-operating with the slide (12).

5. The apparatus according to Claim 4, wherein each slide (12) is inserted in the seat (18) of a unit (11) and is gripped between the guide group (23) and an actuator member (22) that moves the slide (12).

6. The apparatus according to any one of the preceding claims, wherein each slide (12) comprises a curved body (34), which is shaped like an arc of a circle and preferably has a substantially semicircular shape.

7. The apparatus according to any one of preceding claims, wherein the bar support (13) is provided with a clamping system (14) for constraining a bar (7) to the bar support (13).

8. The apparatus according to any one of preceding claims, comprising pusher devices (53), which are carried for example by the bar support (13) and are set longitudinally at a distance from one another along the bar support (13), the pusher device (53) having members movable in a direction substantially radial with respect to the axis (A).

9. A method for installing/removing stator bars of an alternator, comprising the steps of:
- setting within a chamber (4) of a stator (1) and fixing to an inner lateral wall (3) of the chamber (4) at least two actuator units (11), set longitudinally at a distance from one another along an axis (A) of the stator (1), the units (11) being associated to respective movable slides (12), which are substantially arc-shaped and are connected by a bar support (13) parallel to the axis (A);
- setting a bar (7) to be installed or removed on the bar support (13); and
- moving the slides (12) via the actuator units (11) and rotating the bar support (13) about the axis (A) to bring the bar (7) where required in the chamber (4).

10. The method according to Claim 9, comprising the step of rotating the slides (12) to bring the bar support (13) from a loading/unloading position, in which the bar (7) is loaded on or unloaded from the bar support (13), to an insertion/extraction position, in which the bar (7) is introduced into or extracted from a slot (5) formed in the wall (3); or vice versa.

11. The method according to Claim 10, comprising, after a step of bringing the bar support (13) into the insertion/extraction position, the step of moving the bar (7) radially with respect to the wall (3) to insert the bar (7) into the slot (5) or extract the bar (7) from the slot (5).

12. The method according to Claim 10 or Claim 11, wherein the loading/unloading position is in the proximity of the lowest part of the chamber (4) of the stator (1).

13. The method according to any one of Claims 9 to 12, comprising the step of inserting substantially arc-shaped curved shims (55) between the slides (12) and the wall (3).
